**Europäisches Patentamt**

**European Patent Office**

**Office européen des brevets**

(19)

(11) Veröffentlichungsnummer : **0 446 597 B1**

## (12) EUROPÄISCHE PATENTSCHRIFT

(45) Veröffentlichungstag der Patentschrift :
**28.07.93 Patentblatt 93/30**

(51) Int. Cl.$^5$ : **B01J 2/00**, B01J 2/22,
C01B 15/12

(21) Anmeldenummer : **91101397.7**

(22) Anmeldetag : **02.02.91**

---

(54) **Verfahren zur Herstellung von Peroxoborat-Agglemeraten.**

---

(30) Priorität : **10.02.90 DE 4004082**
**06.06.90 DE 4018037**

(43) Veröffentlichungstag der Anmeldung :
**18.09.91 Patentblatt 91/38**

(45) Bekanntmachung des Hinweises auf die
Patenterteilung :
**28.07.93 Patentblatt 93/30**

(84) Benannte Vertragsstaaten :
**AT BE CH DE DK ES FR GB IT LI NL SE**

(56) Entgegenhaltungen :
**EP-A- 0 328 768**
**EP-A- 0 433 653**
**DE-B- 1 164 989**
**DE-B- 1 195 278**
**DE-C- 534 282**

(73) Patentinhaber : **Solvay Interox GmbH**
**Dr.-Gustav-Adolph-Strasse 3**
**W-8023 Höllriegelskreuth (DE)**

(72) Erfinder : **Dötsch, Werner**
**Kreuzgasse 3**
**E-5462 Bad Hönningen (DE)**
Erfinder : **Rösler, Richard**
**Arienheller 3**
**E-5456 Rheinbrohl (DE)**
Erfinder : **Zeiss, Werner**
**Moosstrasse 15**
**W-8038 Gröbenzell (DE)**
Erfinder : **Siegel, Rudolf**
**Kurt Schuhmacher-Str. 8**
**W-5450 Neuwied (DE)**

(74) Vertreter : **Lauer, Dieter, Dr.**
**c/o Solvay Deutschland GmbH, Postfach 220**
**W-3000 Hannover (DE)**

---

## Beschreibung

Die Erfindung bezieht sich auf ein Verfahren zur Herstellung von Natriumperoxoborat-Agglomeraten mit einem Aktivsauerstoffgehalt von wenigstens 14 Gew.-%, bei welchem durch ein Sprühtrocknungsverfahren hergestellte amorphe Primärpartikel aus Natriumperoxoborat einer verdichtenden Preßagglomeration unterworfen werden, sowie die durch dieses Verfahren erhältlichen Natriumperoxoborat-Agglomerate und daraus erhältliche Granulate.

Unter Natriumperoxoboraten werden nachfolgend im wesentlichen kristallwasserfreie, Peroxogruppen enthaltende Borsauerstoffverbindungen verstanden, die ein Verhältnis von Äquivalenten an Natriumkationen (die zur Kompensation von negativen Ladungen in der Verbindung dienen) zu Äquivalenten an Boratomen $\leqq$ 1 und ein Molverhältnis von Aktivsauerstoffatomen ($O_a$; Avox) zu Natriumatomen von $\geqq$ 1 besitzen. Der Begriff Natriumperoxoborat umfaßt hiermit sowohl das klassische Natriumperborat-Monohydrat (Na:B = 1; $O_a$:Na = 1) als auch hochaktivsauerstoffhaltige superoxidierte Natriumperborate ($O_a$:Na $\geqq$ 1) und Perborate mit einem vom klassischen Na:B-Verhältnis (=1:1) abweichenden Molverhältnis von Na:B $\leqq$ 1, z. B. Perborax mit Na:B = 0,5.

Natriumperoxoborate werden durch Umsetzung von Borsauerstoffverbindungen, nach Einstellung des im Produkt angestrebten Na:B-Molverhältnisses, mit Wasserstoffperoxid nach verschiedenen Verfahren aus den wäßrigen Reaktionslösungen/-suspensionen, z.B. durch Kristallisation und gegebenenfalls nachfolgender Trocknung zur Entfernung von Kristallwasser oder durch direkte Trocknung der Reaktionslösungen/-suspensionen mittels Vakuumtrocknungs-, Walzentrocknungs- oder Sprühtrocknungsverfahren als Feststoffe gewonnen. Sie werden gegebenenfalls direkt oder nach weiteren Behandlungsmaßnahmen, wie z.B. Aufbaugranulation, für Bleich-, Desinfektions- und Waschmittelzwecke verwendet.

Im Stand der Technik sind bereits eine Reihe von Verfahren zur Herstellung von Natriumperoxoboraten bekannt.

Die deutschen Patentschriften DE 22 58 319 und DE 24 44 780 beschreiben die Herstellung von abriebfestem Natriumperborat-Monohydrat (PBS-1) aus durch Kristallisation gewonnenem Natriumperborat-Tetrahydrat (PBS-4) in einem Fließbett-Trockner, wobei man in der die Kristallkörner umgebenden Luft eine relative Feuchtigkeit von 40 bis 80 %, vorzugsweise 50 bis 70 %, aufrecht erhält und die Temperatur der Abluft auf mindestens 60 °C einstellt, damit ein Anschmelzen des Perborats erreicht wird.

Die deutsche Offenlegungsschrift DE 38 04 509 (= EP 0 328 768) beschreibt eine zweistufige Herstellung von Natriumperboraten, vorzugsweise Natriumperborat-Monohydrat. In einem ersten Verfahrensschritt wird durch Sprühtrocknung von Natrium, Bor und Aktivsauerstoff enthaltenden wäßrigen Reaktionsgemischen, wie sie auch zur Herstellung von Natriumperborat-Tetrahydrat durch Kristallisation dienen, zunächst ein sehr feines Perborat-Monohydrat erhalten, welches jedoch noch eine unbefriedigende Lagerstabilität aufweist. Dieser Nachteil wird in der genannten Offenlegungsschrift behoben, indem die durch Sprühtrocknung erhaltenen sehr feinen Primärpartikel unmittelbar nach Verlassen der Sprühtrocknungszone in einem zweiten Verfahrensschritt einer Aufbaugranulierung in Gegenwart von Wasser unterworfen werden. Hierbei werden die amorphen Primärpartikel in Granulate aus Perborat mit zumindest teilweise kristalliner Struktur überführt. Zur Durchführung des Verfahrens werden Sprühtrockner mit integriertem Wirbelbett (Fließbettsprühtrockner, FSD) oder Sprühtrockner in Verbindung mit zylindrischen Intensivmischern mit Wirbelwerkzeug vorgeschlagen.

In der deutschen Patentschrift DE 26 50 225 wird ein Wirbelbett-Sprühgranulationsverfahren zur Herstellung von abriebfesten Natriumperborat-Monohydrat-Granulaten vorgestellt. Hierzu wird eine 5 bis 75 gew.-%ige Wasserstoffperoxid enthaltende wäßrige Lösung und eine 5 bis 40 Gew.-% Natriummetaborat enthaltende wäßrige Lösung in einem Wirbelschichttrockner bei einer Temperatur von Raumtemperatur bis 100 °C auf Keime mit kleineren Dimensionen als die der herzustellenden Granulatkörnchen aufgesprüht und dabei das in den wäßrigen Lösungen vorhandene Wasser mit Hilfe des in den Wirbelschichttrockner eingeführten, aufwirbelnden Gases verdampft.

In der deutschen Patentschrift DE 28 11 554 wird die Herstellung von festem, superoxidiertem Natriumperborat mit einem Gehalt von über 16 Gew.-% Aktivsauerstoff beschrieben, wobei das Perborat weniger als 1,4 Atome Wasserstoff pro Aktivsauerstoffatom enthält. Hierzu werden eine Wasserstoffperoxid-Lösung mit einer Konzentration von mindestens 30 Gew.-% und eine wäßrige Natriummetaborat-Lösung gleichzeitig in einen Wirbelschichttrockner eingesprüht. Der Wirbelschichttrockner enthält zugleich Keime, deren Abmessungen geringer sind als die der herzustellenden Perboratteilchen und Wasserstoffperoxid und Natriummetaborat werden in einem Molverhältnis in die Wirbelschicht eingeführt, welches größer ist als 1,12 (Wirbelbett-Sprühgranulationsverfahren, FSG).

In einem Verfahren gemäß der deutschen Offenlegungsschrift 35 05 158 werden superoxidierte Natriumperborate hergestellt, indem man eine Lösung oder Suspension aus Natriummetaborat und Wasserstoffperoxid mit einer Konzentration an Borat (berechnet als $B_2O_3$) von 90 bis 130 g/l und einem molaren Verhältnis von

$H_2O_2$ zu $B_2O_3$ von 2,0:1 bis 4,2:1 in einem Sprühtrockner bei einer Ablufttemperatur von 55 bis 120 °C (vorzugsweise 60 bis 95 °C) trocknet und das anfallende Sprühgut gewinnt.

Die Patentschrift US 2 491 769 beschreibt die Herstellung von Natriumperoxoboraten mit Na:B-Molverhältnissen von 0,53 bis 0,97, vorzugsweise 0,8 bis 0,95.

Hierzu werden Borsauerstoff- und Natriumverbindungen enthaltende wäßrige Gemische unter Einhaltung der angegebenen Na:B-Verhältnisse mit Wasserstoffperoxid umgesetzt und die festen Natriumperoxoborate anschließend durch schnelle Trocknung des Reaktionsgemisches gewonnen. Zur Trocknung werden Walzentrockner eingesetzt; es wird jedoch auch auf die Möglichkeit der Vakuumtrocknung oder der Sprühtrocknung hingewiesen.

Die deutsche Patentschrift 901 287 beschreibt ebenfalls Natriumperborate mit Na:B-Molverhältnissen unter 1, insbesondere unter 0,7. Die Produkte werden gewonnen, indem man einem Natriumborat Borsäure und Wasserstoffperoxid in solchen Verhältnissen zusetzt, daß das Endprodukt Aktivsauerstoff entsprechend einem Molverhältnis von $H_2O_2$:Na von 0,5:1 bis 4,0:1 enthält und daß das Molverhältnis von Na:B im Endprodukt kleiner als 0,5:1 ist, worauf man den erhaltenen Schlamm oder die Lösung durch Eindampfen zur Trockne bringt. Vorzugsweise wird bei verringertem Druck und etwas erhöhter Temperatur getrocknet. Ziel des genannten Verfahrens ist es, solche Natriumperoxoborat-Produkte herzustellen, die in trockenem Zustand mit Borsäure zu trockenen Pulvern gemischt werden können, so daß sauer bzw. im wesentlichen neutral reagierende Produkte erhalten werden, die zudem eine puffernde Wirkung aufweisen.

Die deutsche Auslegeschrift 1 112 502 beschreibt ein Verfahren zur Herstellung von Perborax (Na:B = 0,5) durch Sprühtrocknung eines Borax und Wasserstoffperoxid enthaltenden Reaktionsgemisches. Es können Produkte mit Aktivsauerstoffgehalten von 15 bis 18 Gew.-% erhalten werden, vorzugsweise wird jedoch ein Perborax mit einem Aktivsauerstoffgehalt von 9 bis 12 Gew.-% hergestellt. Um die Lösegeschwindigkeit des erhaltenen Perborax zu erhöhen ist es weiterhin zweckmäßig, kristallin erstarrende Salze in gleichmäßig feiner Verteilung in Mengen von 5 bis 15 Gew.-% vor der Sprühtrocknung in das Reaktionsgemisch einzuarbeiten.

Die Verfahren des Standes der Technik weisen eine Reihe von Nachteilen auf. So umfassen sie beispielsweise eine größere Zahl an getrennten Verfahrensschritten; z.B. muß bei der Herstellung von PBS-1 aus PBS-4 zunächst das Perborat-Tetrahydrat durch Kristallisation gewonnen und anschließend einer Trocknung zur Entfernung des Kristallwassers zugeführt werden. Die durch Sprühtrocknung erhaltenen Perboratprodukte sind gewöhnlich sehr feine Partikel und können daher nicht direkt einer Verwendung zugeführt werden. Zwar können diese sehr feinen Partikel gemäß dem Stand der Technik durch Aufbaugranulation in Gegenwart von Wasser in größere Partikel überführt werden, jedoch können hierbei Aktivsauerstoff-Verluste auftreten. Eine solche Nachbehandlung erfordert die Gegenwart von Granulierhilfsmitteln, z.B. Bindemittel, und von Lösungsmittel, z.B. Wasser, wodurch ein zusätzlicher, abschließender Trocknungsschritt erforderlich wird. Zudem ist bei allen Natriumperoxoboraten des Standes der Technik die Löslichkeit und die Lösegeschwindigkeit sowie die Stabilität gegen Zusammenbacken der Partikel unbefriedigend bzw. noch immer verbesserungsbedürftig. Es besteht daher der Wunsch nach einem einfachen Direktverfahren zur Herstellung von Natriumperoxoborat-Granulaten, mit hohem Aktivsauerstoffgehalt, verwendungskonformen Partikelgrößen bzw. Schüttgewichten und mit zudem guter Löslichkeit und erhöhter Lösegeschwindigkeit.

Es bestand daher die Aufgabe, die Nachteile des Standes der Technik zu überwinden und ein technisch einfaches Verfahren zur Herstellung von Natriumperoxoborat-Agglomeraten, anzugeben, welches eine direkte Herstellung von Peroxoborat-Primärpartikeln durch Sprühtrocknung umfaßt, und welches es zudem gestattet, die Primärpartikel in effizienter Weise in Peroxoborat-Agglomerate, insbesondere Peroxoborat-Granulate mit hohem Aktivsauerstoffgehalt und verbesserten Eigenschaften zu überführen.

Die Aufgabe wird gelöst durch das erfindungsgemäße Verfahren und die erfindungsgemäßen Peroxoborat-Agglomerate bzw. -Granulate.

Die Erfindung betrifft ein Verfahren zur Herstellung von Natriumperoxoborat-Agglomeraten mit einem Aktivsauerstoffgehalt von wenigstens 14 Gew.-%, dadurch gekennzeichnet, daß man durch ein Sprühtrocknungsverfahren hergestellte trockene amorphe Natriumperoxoborat-Primärpatikel mit einem Aktivsauerstoffgehalt von wenigstens 14 Gew.-%, in denen das Verhältnis von Natrium zu Bor ein von dem klassischen 1:1-Verhältnis abweichendes Verhältnis von < 1 ist oder, falls der Aktivsauerstoffgehalt über 18 Gew.-% beträgt, auch das klassische Verhältnis von ca. 1:1 sein kann, durch trockene Walzenpreßagglomeration zu einem amorphen Natriumperoxoborat-Agglomerat in Form von Schülpen verdichtet und diese zu einem kleinteiligeren amorphen Natriumperoxoborat-Agglomerat -Granulat mit gewünschter Korngröße zerkleinert.

Nach dem erfindungsgemäßen Verfahren werden weitgehend trockene Primärpartikel einem Preßvorgang unterworfen und durch Einwirkung des hierfür aufgewendeten Preßdruckes verdichtet. Dadurch wird die erwünschte Zusammenlagerung (Agglomeration) der eingesetzten Primärpartikel bewirkt. Da die Agglomeration durch Pressen bzw. Ausübung eines Druckes zustandekommt, wird der verdichtende Preßvorgang auch als Preß- bzw. Druckagglomeration oder im Falle der Granulatherstellung auch als Preß- bzw. Druckgranulation bezeichnet. Das Preßagglomerationsverfahren zür Herstellung von Agglomeraten bzw. Granulaten ist somit von den sogenannten Aufbauagglomerationsverfahren (Aufbaugranulationsverfahren), bei denen die Haftung zwischen den Partikeln ohne wesentliche Druckeinwirkung ausschließlich durch Verkleben mit Flüssigkeit (z.B. Wasser) und/oder Bindemittel vermittelt wird, zu unterscheiden.

Zwar ist es bekannt, Agglomerationsverfahren zur Verbesserung von Produkteigenschaften einzusetzen, jedoch ist deren Anwendung auf aktivsauerstoffhaltige Produkte, wie z.B. Natriumperoxoborate, neu. So werden Agglomerate im Stand der Technik unter anderem z.B. hergestellt, um Produkte mit Depotwirkung zu erzielen. Demgegenüber überrascht es, daß die Preßagglomeration der amorphen Primärpartikel aus Natriumperoxoboraten, trotz der verdichtenden Wirkung dieses Verfahrens, nicht zu Produkten mit einer Depotwirkung, d.h. einer verzögerten Freigabe bzw. Auflösung des Produktes, führt. Vielmehr erhält man durch Preßagglomeration der amorphen Natriumperoxoborat-Primärpartikel Produkte mit einer gegenüber den Primärpartikeln erhöhten, insbesondere sogar vervielfachten Lösegeschwindigkeit in Wasser oder überwiegend Wasser enthaltenden Medien.

Der Temperaturbereich, in welchem das Preßagglomerationsverfahren der Erfindung durchgeführt werden kann, entspricht dem Temperaturbereich, in dem gute thermische Stabilität der eingesetzten Aktivsauerstoff-haltigen Verbindungen gegeben ist und das Verfahren unter Sicherheitsaspekten unproblematisch ausführbar ist. Die Preßagglomeration der Primärpartikel aus Natriumperoxoborat wird z.B. in einer zweckmäßigen Ausgestaltung der Erfindung bei Temperaturen zwischen etwa 20 bis 50 °C durchgeführt. Das Verfahren ist in diesem Temperaturbereich hinsichtlich des Aktivsauerstoffgehaltes der zu pressenden Natriumperoxoborat-Primärpartikel unproblematisch durchzuführen; das Produkt beeinträchtigende Aktivsauerstoffverluste werden nicht beobachtet.

Die Größe des zur Erzielung der Vorteile der Erfindung aufzuwendenden Druckes ist zwar in weiten Grenzen frei wählbar und kann daher speziellen Wünschen bzw. Anforderungen hinsichtlich des Produktes angepaßt werden; nach unteren Werten hin wird der Druck jedoch durch zwei Vorgaben mitbestimmt. Einerseits sollte der mindestens aufzubringende Druck dazu ausreichen, um dem Agglomerat der Primärpartikel eine ausreichende mechanische Festigkeit und Schüttdichte zu verleihen und um andererseits gleichzeitig eine ausreichende Erhöhung der Lösegeschwindigkeit, die mit zunehmenden Druck steigt, zu erzielen. Für einige Anwendungen kann dabei bereits eine mäßige Erhöhung der Lösegeschwindigkeit, z.B. auf das 1,2- bis 1,5-fache der Lösegeschwindigkeit der Primärpartikel als ausreichend angesehen werden. In der Regel wird jedoch eine größere Erhöhung der Lösegeschwindigkeit angestrebt werden, z.B. daß 2- bis 3-fache der Lösegeschwindigkeit der Primärpartikel. Der zur Erzielung der gewünschten Eigenschaften mindestens aufzuwendende Preßdruck hängt von der Art der eingesetzten Preßmaschinen ab und kann im Hinblick auf die gewünschten Produkteigenschaften vom Fachmann leicht in einigen wenigen Vorversuchen ermittelt werden. Die obere Grenze des aufzubringenden Druckes ist nicht kritisch und wird lediglich durch den jeweils technisch maximal erreichbaren bzw. zulässigen Druck der für die Preßagglomeration eingesetzten Apparate begrenzt. In einer beispielhaften Ausgestaltung der Erfindung mit einer Walzenpresse werden z.B. die amorphen Primärpartikel aus Natriumperoxoborat durch Pressen bei Drucken von wenigstens 0,2 t bis maximal etwa 2 t pro cm Walzenlänge verdichtet. Bevorzugt wird bei Drucken von wenigstens 0,8 t pro cm Walzenlänge verdichtet.

Gegenüber den feinen Primärpartikelhaufwerken sind die erfindungsgemäß erhaltenen Agglomerate geformte Produkte oder es sind in Form und Aussehen verbesserte Agglomeratschüttungen (Granulate), die weniger zum Stauben, Anhaften, Zusammenbacken und Entmischen neigen, sich besser dosieren und transportieren lassen, eine bessere Rieselfähigkeit und eine definierte Schüttdichte besitzen. Nach dem erfindungsgemäßen Verfahren lassen sich Produkteigenschaften wie Granulatform und -größe, sowie Schüttgewicht der Peroxoborate den Anforderungen an unterschiedliche Anwendungszwecke oder sonstige Erfordernisse des Marktes anpassen. Die gewünschten Produkteigenschaften bestimmen dabei maßgeblich das jeweils zweckmäßigste Preßagglomerationsverfahren .

Für das Verfahren der Erfindung lassen sich an sich alle üblichen Preßagglomerationseinrichtungen einsetzen. Hierbei kommen die Vorteile der Erfindung beim Einsatz von ausschließlich trockenem Primärpartikelgut voll zum Tragen, da bei diesem Verfahren die Stabilität des Produktes (insbesondere die Aktivsauerstoff-Stabilität) durch anwesende oder zugeführte Flüssigkeit (insbesondere Wasser) nicht negativ beeinflußt werden kann und sich eine an die Agglomeration anschließende Trocknung erübrigt. Eine Umwandlung der amorphen Primärartikel unter Bildung kristalliner Anteile findet während des Preßagglomerationsschrittes nicht bzw. allenfalls nur in vernachlässigbarem Ausmaß statt. Ein weiterer Vorteil ist dadurch gegeben, daß Bindemittel, Gleitmittel und/oder weitere Hilfsstoffe bei dem trockenen Preßagglomerationsverfahren für die Durchführung nicht erforderlich sind; somit lassen sich unerwünschte, ggf. durch diese Zusatz- und Hilfsstoffe bedingte Eigenschaftsveränderungen in den gepreßten Peroxoborat-Agglomeraten vermeiden. Es ist andererseits aber durchaus möglich, andere gewünschte, die Agglomerate in zweckmäßiger Weise modifizierende Additive, z.B. Farbstoffe, mit den zu verpressenden Primärpartikeln vor der Preßagglomeration homogen zu vermischen.

4

Geeignete Preßagglomerationseinrichtungen sind z.B. Walzenpressen (Wälzdruckmaschinen) wie Glattwalzen oder Strukturwalzen. Diese Einrichtungen können mit oder gegebenenfalls auch ohne Zwangszufuhreinrichtungen für das zu verpressende Primärpartikelgut betrieben werden. Je nach der eingesetzten Preßagglomerationseinrichtung werden die Primärpartikel unter Druck in dichte, glatte oder strukturierte Platten, den sogenannten Schülpen verpreßt. Diese werden noch zu Granulat gewünschter Größe zerkleinert.

In besonders zweckmäßigen Ausgestaltungen des erfindungsgemäßen Verfahrens werden als Walzenpressen Strukturwalzen eingesetzt. Die Strukturwalzen sind geriffelte oder kontinuierlich profilierte Walzen zur Erzeugung von glatten oder profilierten Platten (Schülpen), Bändern oder Kompaktlingen. Bei den Strukturwalzen können leicht oder stärker profilierte Walzen, letztere in offener oder geschlossener Einstellung, eingesetzt werden. Man erhält so mehr oder weniger glatte, leicht oder stärker strukturierte (z.B. waffelartige) Schülpen, Wellplatten oder bei über die gesamte Walzenbreite gleichmäßig profilierten Walzen in geschlossener Einstellung auch Stäbe.

Die durch Preßagglomeration erhaltenen Produkte, wie insbesondere Schülpen, Wellplatten oder auch Stäbe, können nach an sich bekannten Verfahren zu Granulaten gewünschter Korngröße und Schüttdichte zerkleinert werden. Zur Zerkleinerung eignen sich z.B. Fladen- oder Schülpenbrecher für eine Grobgranulierung oder Granuliersiebe für eine Feingranulierung. Es können so beispielsweise Natriumperoxoboratgranulate mit Korngrößen von 0,1 bis 10 mm erhalten werden.

Die im erfindungsgemäßen Verfahren der Preßagglomeration zugeführten Primärpartikel werden durch ein Sprühtrocknungsverfahren hergestellt. Sowohl die Herstellung der Primärpartikel im Sprühtrocknungsverfahren als auch die Preßagglomeration können unabhängig voneinander jeweils für sich kontinuierlich betrieben werden.

Es ist nicht zwingend, das Sprühgut, d.h. die durch Sprühtrocknung gewonnenen Primärpartikel, unmittelbar der Preßagglomeration zu unterwerfen. So kann das Sprühgut durchaus z.B. zwischengelagert werden bzw. die Sprühtrocknung und die Preßagglomeration in separaten Betrieben durchgeführt werden. Eine besonders vorteilhafte Ausgestaltung der Erfindung ist jedoch die vollkontinuierliche Verfahrensweise. Bei dieser vollkontinuierlichen Verfahrensweise werden trockene Primärpartikel direkt nach ihrer Gewinnung durch Sprühtrocknung (z.B. in gewöhnlichen Sprühtrocknungsanlagen oder Sprühtrocknungsanlagen mit integriertem Wirbelbett) einer Preßagglomerationseinrichtung zugeführt und zu Schülpen gepreßt, sowie nachfolgend die Schülpen zu Granulaten gewünschter Korngröße und Schüttdichte zerkleinert. Vorteilhafte erfindungsgemäße Granulate weisen z.B. Korngrößen von etwa 0,1 bis 2 mm und Schüttdichten von 0,4 bis 1,2 g/l, sowie sehr gute Abriebfestigkeit, verringerte Neigung zum Zusammenbacken und erhöhte Lösegeschwindigkeit auf.

Die in einer vorteilhaften Ausgestaltung des Verfahren der Erfindung verwendeten Primärpartikel sind beispielsweise amorphe, trockene und kristallwasserfreie Partikel aus Natriumperoxoboraten, die durch beliebige, an sich im Stand der Technik bekannte Sprühtrocknungsverfahren gewonnen werden können. Hierbei werden wäßrige Lösungen oder Suspensionen, die zumindest je einen geeigneten Ausgangsstoff für die in Natriumperoxoboraten enthaltenen Bor-, Natrium- und Aktivsauerstoffatome in gewünschter Konzentration und im gewünschten Verhältnis zueinander enthalten, versprüht und die versprühten Lösungs- oder Suspensions-Tröpfchen mit einem erhitzten Gas, in der Regel Luft, getrocknet, wobei man dieses Gas im wesentlichen im Gleichstrom mit den versprühten Tröpfchen führt. Es werden in bekannter Weise die an sich für die Herstellung von Natriumperoxoboraten durch Sprühtrocknung geeigneten Verfahrensbedingungen eingestellt. Beispielsweise werden wie bei gewöhnlichen Sprühtrocknungsverfahren (SD) Zulufttemperaturen von 100 bis 400 °C, vorzugsweise 150 bis 350 °C, und Ablufttemperaturen von 55 bis 120 °C, vorzugsweise von 60 bis 100 °C eingestellt. Es ist auch möglich, die Primärpartikel durch Sprühtrocknung in einem Fließbettsprühtrockner (= Sprühtrockner mit integriertem Wirbelbett; FSD) herzustellen.

Nach dieser Ausgestaltung des erfindungsgemäßen Verfahren können Natriumperoxoborat-Agglomerate bzw. Granulate unterschiedlichster chemischer Zusammensetzung erhalten werden, je nach Art und Zusammensetzung der im Sprühtrocknungsverfahren für die Herstellung der amorphen Primärartikel eingesetzten Lösungen oder Suspensionen. Die Natriumperoxoborat-Agglomerate bzw. Granulate können daher in ihrer chemischen Zusammensetzung z.B. den superoxidierten Natriumperboraten als auch Perboraten mit einem vom klassischen Na:B-Molverhältnis (=1:1) abweichenden Molverhältnis von Na:B < 1 entsprechen. Die Aktivsauerstoffgehalte dieser Natriumperborate betragen 14 bis 25 Gew.-%.

Eine Gruppe der für diese Ausgestaltung des erfindungsgemäßen Verfahrens verwendeten amorphen Primärpartikel zeichnet sich chemisch durch ein Na:B-Molverhältnis von über 0,67:1 bis 1:1 und einen Aktivsauerstoffgehalt von 14 bis 25 Gew.-% aus, welcher jedoch bei einem Na:B-Verhältnis von 1:1 über 18 Gew.-% beträgt; bevorzugt sind solche Primärpartikel mit einem Aktivsauerstoffgehalt von 16 bis 23 Gew.-%. Diese Gruppe von Primärpartikeln umfaßt damit auch solche amorphen Primärpartikel aus superoxidierten Natriumperoxoborat, die z.B. nach dem Verfahren gemäß der deutschen Offenlegungsschrift 35 05 158 hergestellt werden können.

Natriumperoxoborat-Agglomerate bzw. Granulate mit sehr hoher Löslichkeit und Lösegeschwindigkeit werden nach dieser Ausgestaltung des erfindungsgemäßen Verfahrens erhalten, wenn für den Preßagglomerationsschritt Primärpartikel aus Natriumperoxoboraten mit einem vom klassischen Na:B-Molverhältnis (=1:1) abweichenden Na:B-Molverhältnis von 0,33:1 bis 0,67:1 und mit einem Aktivsauerstoffgehalt von 14 bis 25 Gew.-%, vorzugsweise von 16 bis 23 Gew.-%, eingesetzt werden. Diese Natriumperoxoborat-Primärpartikel können in analoger Weise zu den vorstehend genannten Natriumperoxoborat-Primärpartikeln hergestellt werden, indem man eine wäßrige Lösung oder Suspension, die mindestens je einen geeigneten Ausgangsstoff für die im herzustellenden Natriumperoxoborat enthaltenen Bor-, Natrium- und Aktivsauerstoffatome in gewünschter Konzentration und in gewünschtem Verhältnis zueinander (selbstverständlich unter Einhaltung der vorstehenden Vorgaben bezüglich Na:B-Molverhältnis und des $O_a$-Gehaltes) enthält, in an sich bekannter Weise sprühtrocknet. Die Ausgangsstoffe werden dabei zur Herstellung einer vorteilhaften Untervariante dieser Primärpartikel dem sprühzutrocknenden Reaktionsgemisch insbesondere in solchen Anteilen zugeführt, daß in den erhaltenen Primärpartikeln ein Molverhältnis von Natrium zu Bor im Bereich von 0,45:1 bis 0,65:1 vorliegt.

Als Ausgangsverbindungen zur Herstellung der Primärpartikel der Natriumperoxoborate eignen sich alle für die Herstellung von Natriumperoxoboraten an sich üblichen Quellen für Bor, Natrium und Aktivsauerstoff. Geeignete Quellen für Bor sind beispielsweise Borsäure, Boroxid ($B_2O_3$), Borax, z.B. Borax-Dekahydrat oder Borax-Pentahydrat, Metaborat, Orthoborat, Bormineralien usw.; als Quelle für Aktivsauerstoff eignet sich beispielsweise Wasserstoffperoxidlösung (z.B. 30 bis 85 gew.-%ig) oder Natriumperoxid; als Quelle für gegebenenfalls noch zu ergänzendes Natrium können an sich alkalisch reagierende anorganische Natriumverbindungen wie Natriumhydroxid oder Natriumoxid dienen; die vorstehende Aufzählung ist nur beispielhaft und weder abschließend noch einschränkend.

In zweckmäßigen Ausgestaltungen der Erfindung werden den zu versprühenden Lösungen oder Suspensionen übliche Stabilisatoren für Perverbindungen zugesetzt. Gegebenenfalls kann man auch den durch Sprühtrocknung gewonnenen amorphen Primärpartikeln noch weiteren Stabilisator vor der Preßagglomeration zusetzen. Die Stabilisatoren werden in an sich zur Stabilisierung von Peroxoboratverbindungen geeigneten Mengen eingesetzt. Als Stabilisatoren eignen sich beispielsweise Alkalimetall- oder Magnesiumsilikate, Magnesiumsulfat, Phosphate, wie Metaphosphat, organische Stabilisatoren wie Chinolinsäure, Salicylsäure oder Dipicolinsäure (DPA), Chelatbildner wie 8-Oxychinolin oder Ethylendiamintetraessigsäure (EDTA), Phosphonsäurederivate wie z.B. Methylen- oder Aminomethylenphosphonsäuren oder deren Salze, sowie auch geringe Mengen üblicher Netzmittel. Stabilisatoren können in üblichen Konzentrationen von 0,1 bis 10 g/kg in den zu versprühenden Lösungen bzw. Suspensionen vorliegen. Die Stabilisatoren werden vorzugsweise bereits in die Reaktionsgemische zur Herstellung der amorphen Primärpartikel eingebracht. In einfacher Weise kann dieses über die eingesetzte Wasserstoffperoxidlösung erreicht werden. Insbesondere werden die Stabilisatoren dabei in solchen Mengen eingesetzt, wie sie später auch in den Peroxoborat-Agglomeraten bzw. Granulaten vorliegen sollen.

Die Erfindung umfaßt weiterhin amorphe Natriumperoxoborat-Agglomerate in Form von nach dem erfindungsgemäßen Verfahren erhältlichen amorphen Natriumperoxoborat-Agglomerat-Granulaten mit einem Aktivsauerstoffgehalt von wenigstens 14 Gew.-%, wobei das Verhältnis Natrium : Bor ein von dem klassischen 1:1-Verhältnis abweichendes Verhältnis von < 1 ist oder, falls der Aktivsauerstoffgehalt über 18 Gew.-% beträgt, auch das klassische Verhältnis von ca. 1:1 sein kann. Die Natriumperoxoborat-Granulate zeichnen sich hierbei z.B. durch Korngrößen von 0,1 bis 2 mm und Schüttgewichte von 0,4 bis 1,2 g/l aus.

In einer Ausgestaltung der erfindungsgemäßen Natriumperoxoborat-Agglomerate in der Form von Granulaten zeichnen sich diese durch ein Na:B-Molverhältnis von über 0,67:1 bis 1:1 und einen Aktivsauerstoffgehalt von 14 bis 25 Gew.-%, vorzugsweise 16 bis 23 Gew.-%, aus, welcher jedoch bei einem Na:B-Verhältnis von 1:1 mindestens 18 Gew.-% beträgt. Diese Ausgestaltung umfaßt z.B. sowohl Agglomerate, bzw. Granulate von superoxidierten Natriumperoxoboraten als auch solche Agglomerate bzw. Granulate mit einer chemischen Zusammensetzung, die einen gegenüber dem klassischen Na:B-Molverhältnis von 1:1 bis etwa zu einem Drittel verringerten Natriumgehalt aufweisen.

In einer anderen Ausgestaltung liegen erfindungsgemäße Natriumperoxoborate-Agglomerate in der Form von Granulaten mit sehr hoher Löslichkeit und Lösegeschwindigkeit vor, die sich durch ein Na:B-Molverhältnis von 0,33:1 bis 0,67:1 und einen Aktivsauerstoffgehalt von 14 bis 25 Gew.-%, vorzugsweise 16 bis 23 Gew.-%, auszeichnen.

Besonders günstige Natriumperoxoborat-Agglomerate bzw. Granulate zeichnen sich durch Molverhältnisse von Natrium zu Bor im Bereich von 0,45 bis 0,65 aus.

Die Natriumperoxoborat-Granulate der Erfindung zeichnen sich durch eine sehr hohe Lösegeschwindigkeit in Wasser aus. Die Lösegeschwindigkeit beträgt z.B. bei vorteilhafen Natriumperoxoborat-Granulaten mehr als 80 %, bei bevorzugten Natriumperoxoborat-Granulaten sogar mehr als 90 %. Die Lösegeschwindigkeit wird hierbei unter Standardbedingungen 3 Minuten, 15 °C, 2 g/l bestimmt.

Die Erfindung umfaßt ferner farbige Natriumperoxoborat-Granulate, die nach dem erfindungsgemäßen Verfahren hergestellt werden können, indem den Primärpartikeln vor dem Verfahrensschritt der Preßagglomeration ein Farbstoffpulver homogen zugemischt wird.

Durch die Erfindung wird ein einfaches und direktes Verfahren zur Herstellung von Natriumperoxoborat-Agglomeraten in der Form von Granulaten zur Verfügung gestellt. Nach dem erfindungsgemäßen Verfahren sind Granulate in einfacher Weise realisierbar, die sich für eine Vielzahl unterschiedlicher Anwendungen auf dem Bleich-, Desinfektions-, Reinigungs- und Waschmittelsektor eignen. Die nach dem erfindungsgemäßen Verfahren herstellbaren Granulate lassen sich z.B. hinsichtlich ihrer Eigenschften wie Korngröße oder Schüttdichte bestens in gewünschter Weise einstellen und können daher leicht an sich diesbezüglich ändernde Erfodernisse angepaßt werden. Das Verfahren vermeidet jegliche Einwirkung von Feuchtigkeit (z.B. freies Wasser oder Kristallwasser) auf die im erfindungsgemäßen Verfahren intermediär erzeugten Primärpartikel ("Trockenverfahren") und führt zu Natriumperborat-Agglomeraten bzw. Granulaten mit verbesserten Eigenschaften. Die erfindungsgemäßen Natriumperoxoborat-Agglomerate bzw. Granulate zeigen erhöhte Lösegeschwindigkeiten in wäßrigen Medien. In besonderen Ausgestaltungen der erfindungsgemäßen Natriumperoxoborat-Granulate mit Na:B-Molverhältnissen von 0,33:1 bis 0,67:1, zeigen diese darüber hinaus auch hohe Löslichkeit in wäßrigem Medium. Weiterhin zeigen die erfindungsgemäßen Natriumperoxoborat-Agglomerate bzw. Granulate deutlich verbesserte Lagerstabilität. Dieses zeigt sich einerseits in der guten Stabilisierung des Aktivsauerstoffgehaltes, wodurch selbst unter extremen Lagerbedingungen Aktivsauerstoffverluste deutlich verringert werden. Andererseits zeigen die erfindungsgemäßen Natriumperoxoborat-Agglomerate bzw. Granulate verbessertes Caking-Verhalten, d.h. deutlich verminderte Neigung zum Zusammenbacken. Weiterhin sind die Produkte vollständig röntgenographisch amorph; die Preßagglomeration führt somit nicht zur Ausbildung von kristallinen Bereichen in den Peroxoborat-Agglomeraten bzw. Granulaten der Erfindung.

Nachfolgend wird die Erfindung anhand von Beispielen weiter erläutert, ohne sie jedoch in ihrem Umfange zu beschränken.

Beispiel 1

Zunächst wurde durch Mischen von Wasser, wäßriger Natriumhydroxid-Lösung (50 gew.-%ig), Borax und Wasserstoffperoxid (60 gew.-%ig) eine Sprühlösung hergestellt und mit Magnesiumsulfat-Hexahydrat und 1,1-Hydroxyethandiphosphonsäure (HEDP; 60 gew.-%ig) stabilisiert. Man erhielt eine Sprühlösung mit einem Borgehalt von 5 Gew.-%, einem Na:B-Molverhältnis von 0,58:1, einem $O_a$:B-Molverhältnis von 1:1 und einem Gehalt von 0,4 Gew.-% $MgSO_4 \cdot 6H_2O$ und von 0,03 Gew.-% HEDP.

Die erhaltene Sprühlösung wurde in einem Fließbettsprühtrockner (= Sprühtrockner mit integriertem Wirbelbett) unter folgenden Betriebsbedingungen versprüht.

| Speisemenge: | 180 kg/h |
|---|---|
| Trocknungsluft: | 1670 kg/h |
| Lufteintritt/Sprühtrockner: | 270 °C |
| Lufteintritt/Fließbett: | 40 °C |
| Luftaustritt/Sprühtrockner: | 86 °C |
| Fließbettemperatur: | 80 °C |
| Produktion: | 66 kg/h |

Das anfallende, trockene und kristallwasserfreie, amorphe Sprühgut (Primärpartikel) wurde gesammelt und für die Preßagglomeration einer leicht strukturierten Walzenpresse zugeführt. Die Primärpartikel wurden mit einem Preßdruck von 1,6 t/cm Walzenlänge (= ca. 100 bar) zu Schülpen mit einer Dicke von 1 mm gepreßt und anschließend in an sich bekannter Weise durch Granuliersiebe (Maschenweite 2 mm/1 mm) fein granuliert. Die intermediär erhaltenen Primärpartikel und das hergestellte Granulat wiesen die nachfolgend angegebenen Produkteigenschaften auf.

| Produktanalyse | Primärpartikel | Granulat |
|---|---|---|
| Schüttdichte | 0,2 g/ml | 0,74 g/ml |
| Korngröße < 150 µm | 3,1 % | 9,3 % |
| >1000 µm | 6,7 % | 8,2 % |
| Lösegeschwindigkeit (3 Minuten/15 °C; 2 g/l) | 30 % | 91 % |
| Aktivsauerstoffgehalt | 16,5 Gew.-% | 16,5 Gew.-% |

Beispiel 2

Zunächst wurde durch Mischen von Wasser, wäßriger Natriumhydroxid-Lösung (50 gew.-%ig) und Borax eine Orthoboratlösung hergestellt, die anschließend mit Wasserstoffperoxid (60 gew.-%ig) versetzt und dann mit dem Pentanatriumsalz von Ethylendiamintetramethylenphosphonsäure (EDTMP) stabilisiert wurde. Man erhielt eine Sprühlösung mit einem Borgehalt von 2,7 Gew.-%, einem Na:B-Molverhältnis von 0,98:1, einem $O_a$:B-Molverhältnis von 1,18:1 und einem Gehalt von 0,14 Gew.-% EDTMP.

Die erhaltene Sprühlösung wurde in einem Sprühtrockner unter folgenden Betriebsbedingungen versprüht.

Speisemenge: 180 kg/h
Trocknungsluft: 1670 kg/h
Lufteintritt/Sprühtrockner: 280 °C
Luftaustritt/Sprühtrockner: 95 °C
Produktion: 66 kg/h

Das anfallende, trockene und kristallwasserfreie, amorphe Sprühgut (Primärpartikel) wurde gesammelt und für die Preßagglomeration einer leicht strukturierten Walzenpresse zugeführt. Die Primärpartikel wurden mit einem Preßdruck von 1,7 t/cm Walzenlänge (= ca. 105 bar) zu Schülpen mit einer Dicke von 1,7 mm gepreßt und anschließend in an sich bekannter Weise durch ein Granuliersieb (Maschenweite 2 mm) fein granuliert. Der Feinanteil mit einer Partikelgröße < 150 µm wurde in den Preßagglomerations -Schritt zurückgeführt. Die intermediär erhaltenen Primärpartikel und das hergestellte Granulat wiesen die nachfolgend angegebenen Produkteigenschaften auf.

| Produktanalyse | Primärpartikel | Granulat |
|---|---|---|
| Schüttdichte | 0,34 g/ml | 0,85 g/ml |
| Korngröße < 150 µm | 98 % | 1,8 % |
| >1000 µm | 0 % | 56,2 % |
| Lösegeschwindigkeit (3 Minuten/15 °C; 2 g/l) | 90 % | 100 % |
| Aktivsauerstoffgehalt | 18,2 Gew.-% | 18,2 Gew.-% |

Beispiel 3

Zunächst wurde durch Mischen von Wasser, wäßriger Natriumhydroxid-Lösung (50 gew.-%ig) und Borax eine Orthoboratlösung hergestellt, die anschließend mit Wasserstoffperoxid (60 gew.-%ig) versetzt und dann mit dem Pentanatriumsalz von Ethylendiamintetramethylenphosphonsäure (EDTMP) stabilisiert wurde. Man erhielt eine Sprühlösung mit einem Borgehalt von 2,5 Gew.-%, einem Na:B-Molverhältnis von 0,98:1, einem $O_a$:B-Molverhältnis von 1,3:1 und einem Gehalt von 0,14 Gew.-% EDTMP.

Die erhaltene Sprühlösung wurde in einem Sprühtrockner unter folgenden Betriebsbedingungen versprüht.

Lufteintritt/Sprühtrockner: 280 °C  
Luftaustritt/Sprühtrockner: 95 °C

Das anfallende, trockene und kristallwasserfreie, amorphe Sprühgut (Primärpartikel) wurde gesammelt und für die Preßagglomeration einer leicht strukturierten Walzenpresse zugeführt. Die Primärpartikel wurden mit einem Preßdruck von 1,7 t/cm Walzenlänge (= ca. 105 bar) zu Schülpen mit einer Dicke von 1,7 mm gepreßt und anschließend in an sich bekannter Weise durch ein Granuliersieb (Maschenweite 2 mm) fein granuliert. Der Feinanteil mit einer Partikelgröße < 150 µm wurde in den Preßagglomerations-Schritt zurückgeführt. Die intermediär erhaltenen Primärpartikel und das hergestellte Granulat wiesen die nachfolgend angegebenen Produkteigenschaften auf.

| Produktanalyse | Primärpartikel | Granulat |
|---|---|---|
| Schüttdichte | 0,3 g/ml | 0,84 g/ml |
| Korngröße < 150 µm | 100 % | 2 % |
| >1000 µm | 0 % | 51,9 % |
| Lösegeschwindigkeit (3 Minuten/15 °C; 2 g/l) | 55 % | 80 % |
| Aktivsauerstoffgehalt | 20,8 Gew.-% | 20,8 Gew.-% |

Beispiel 4

Zunächst wurde durch Mischen von Wasser, wäßriger Natriumhydroxid-Lösung (50 gew.-%ig), Borax ($H_3BO_3$) und Wasserstoffperoxid (60 gew.-%ig) eine Sprühlösung hergestellt und mit dem Pentanatriumsalz von Ethylendiamintetramethylenphosphonsäure (EDTMP) stabilisiert. Man erhielt eine Sprühlösung mit einem Borgehalt von 4 Gew.-%, einem Na:B-Molverhältnis von 0,53:1, einem $O_a$:B-Molverhältnis von 0,9:1 und einem Gehalt von 0,1 Gew.-% EDTMP.

Die erhaltene Sprühlösung wurde in einem Fließbett-sprühgranulator unter folgenden Betriebsbedingungen versprüht.

Lufteintritt/Fließbett: 150 °C  
Luftaustritt/Fließbett: 60 °C  
Fließbetttemperatur: 65-70 °C

Das anfallende, trockene und kristallwasserfreie, amorphe Sprühgut (Primärpartikel) wurde gesammelt und für die Preßagglomeration einer leicht strukturierten Walzenpresse zugeführt. Die Primärpartikel wurden mit einem Preßdruck von 1,7 t/cm Walzenlänge (= ca. 105 bar) zu Schülpen mit einer Dicke von 1,7 mm gepreßt und anschließend in an sich bekannter Weise durch ein Granuliersieb (Maschenweite 2 mm) fein granuliert. Die intermediär erhaltenen Primärpartikel und das hergestellte Granulat wiesen die nachfolgend angegebenen Produkteigenschaften auf.

| Produktanalyse | Primärpartikel | Granulat |
|---|---|---|
| Schüttdichte | 0,61 g/ml | 0,76 g/ml |
| Korngröße < 150 μm | 0,2 % | 7,9 % |
| >1000 μm | 78,5 % | 41,3 % |
| Lösegeschwindigkeit | 20 % | 92 % |
| (3 Minuten/15 °C; | . | |
| 2 g/l) | | |
| Aktivsauerstoffgehalt | 15,4 Gew.-% | 15,4 Gew.-% |

Beispiel 5

Zur Untersuchung der chemischen Stabilität (Avox-Stabilität ) wurden die in Beispiel 1 bis Beispiel 4 intermediär erhaltenen Primärpartikel und die daraus hergestellten Granulate auf ihre Trocken- und Naßstabilität untersucht.

Zur Bestimmung der Trockenstabilität wurde jeweils 1 g der zu untersuchenden Probe im offenen Reagenzglas 1 Stunde bei 100 °C in einem Ölbad erhitzt und danach der durch Zersetzung bedingte Verlust an Aktivsauerstoff ermittelt.

Zur Bestimmung der Naßstabilität wurde jeweils 1 g der zu untersuchenden Probe im Reagenzglas mit 1,67 ml Wasser versetzt und 20 Minuten bei 90 °C in einem Wasserbad erhitzt. Danach wurde der durch Zersetzung bedingte Verlust an Aktivsauerstoff ermittelt.

Zum Vergleich wurde auch die Stabilität von herkömmlichem Natriumperborat-Monohydrat (hergestellt durch Wirbelbett-Trocknung von durch Kristallisation gewonnenem Natriumperborat-Tetrahydrat) unter analogen Bedingungen ermittelt.

Die Bestimmung des Aktivsauerstoffgehaltes vor und nach der Lagerung erfolgte durch an sich bekannte titrimetrische Methoden. Es wurden die nachfolgend zusammengestellten Ergebnisse erhalten.

| Beispiel | Avox-Verlust in % | |
|---|---|---|
| | Trockenstabilität 100 °C / 1 h | Naßstabilität 90 °C / 20 Min. |
| 1 | 10 | 7,3 |
| 2 | 2,4 | 3,9 |
| 3 | 3,1 | 5 |
| 4 | 9,1 | 4,4 |
| Vergleich (PBS-1) | 8 | 9 |

Beispiel 6

Zur weiteren Untersuchung der chemischen Stabilität (Avox-Stavilität) wurden die in Beispiel 1 und Beispiel 3 intermediär erhaltenen Primärpartikel und die daraus hergestellten Granulate jeweils in ein standardisiertes zeolithhaltiges Basiswaschpulver in an sich für Waschmittelzusammensetzungen üblichen Mengen einge-

10

bracht, so daß der anfängliche Gesamtaktivsauerstoffgehalt zwischen 2,00 und 2,20 Gew.-% der Gesamtmischung betrug. Die erhaltenen Mischungen wurden in wachskaschierte Kartons abgefüllt und anschließend bei 37 °C und einer relativen Luftfeuchtigkeit von 70 % gelagert. Nach einer Lagerzeit von vier Wochen wurde der durch Zersetzung bedingte Verlust an Aktivsauerstoff ermittelt (die Bestimmung des Aktivsauerstoffgehaltes vor und nach der Lagerung erfolgte durch an sich bekannte titrimetrische Methoden). Zum Vergleich wurde die Stabilität von herkömmlichem Natriumperborat-Monohydrat (hergestellt durch Wirbelbett-Trocknung von durch Kristallisation gewonnenem Natriumperborat-Tetrahydrat) unter analogen Bedingungen ermittelt. Es wurden die nachfolgend zusammengestellten Ergebnisse erhalten.

| | Avox-Verlust in % | |
|---|---|---|
| Beispiel | Primärpartikel | Granulat |
| 1 | 53 | 32 |
| 3 | n.b.* | 28 |
| Vergleich herkömmliches PBS-1 | -- | 39 |

*n.b. = nicht bestimmt

## Patentansprüche

1. Verfahren zur Herstellung von natriumperoxoborat-Agglomeraten mit einem Aktivsauerstoffgehalt von wenigstens 14 Gew.-%, dadurch gekennzeichnet, daß man durch ein Sprühtrocknungsverfahren hergestellte trockene amorphe natriumperoxoborat-Primärpartikel mit einem Aktivsauerstoffgehalt von wenigstens 14 Gew.-%, in denen das Verhältnis von Natrium zu Bor ein von dem klassischen 1:1-Verhältnis abweichendes Verhältnis von < 1 ist oder, falls der Aktivsauerstoffgehalt über 18 Gew.-% beträgt, auch das klassische Verhältnis von ca. 1:1 sein kann, durch trockene Walzenpreßagglomeration zu einem amorphen natriumperoxoborat-Agglomerat in Form von Schülpen verdichtet und diese zu einem kleinteiligeren amorphen natriumperoxoborat-Agglomerat-Granulat mit gewünschter Korngröße zerkleinert.

2. Verfahren nach Anspruch 1, dadurch gekennzeichnet, daß man die Primärpartikel durch Pressen bei Temperaturen von 20 bis 50 °C verdichtet.

3. Verfahren nach Anspruch 1 oder 2, dadurch gekennzeichnet, daß man die Schülpen durch Pressen bei Drucken von wenigstens 0,2 t pro cm Walzenlänge, vorzugsweise bei Drucken von wenigstens 0,8 t pro cm Walzenlänge, herstellt.

4. Verfahren nach einem der vorhergehenden Ansprüche, dadurch gekennzeichnet, daß man den Primärpartikeln vor dem Pressen ein Farbstoffpulver homogen zumischt.

5. Amorphe Natriumperoxoborat-Agglomerate in Form von nach dem Verfahren der Ansprüche 1 bis 4 erhältlichen amorphen Natriumperoxoborat-Agglomerat-Granulaten mit einem Aktivsauerstoffgehalt von wenigstens 14 Gew.-%, wobei das Verhältnis Natrium : Bor ein von dem klassischen 1:1-Verhältnis abweichendes Verhältnis von < 1 ist oder, falls der Aktivsauerstoffgehalt über 18 Gew.-% beträgt, auch das klassische Verhältnis von ca. 1:1 sein kann.

6. Natriumperoxoborat-Agglomerate nach Anspruch 5, in der Form von Granulaten, mit einem Na:B-Molverhältnis von 0,33:1 bis 0,67:1 und einem Aktivsauerstoffgehalt von 14 bis 25 Gew.-%, vorzugsweise 16 bis 23 Gew.-%.

7. Natriumperoxoborat-Agglomerate nach Anspruch 6 in der Form von Granulaten, mit einem Na:B-Molverhältnis von 0,45:1 bis 0,65:1.

8. Natriumperoxoborat-Agglomerate nach Anspruch 5, in der Form von Granulaten, mit einem Na:B-Molverhältnis von über 0,67:1 bis 1:1 und einem Aktivauerstoffgehalt von 14 bis 25 Gew.-%, vorzugsweise 16 bis 23 Gew.-%, wobei im Falle eines Na:B-Molverhältnisses von 1:1 der Aktivsauerstoffgehalt über 18 Gew.-% beträgt.

9. Farbiges Peroxoborat-Agglomerat, vorzugsweise in der Form von Granulaten, nach einem der Ansprüche 5 bis 8.

## Claims

1. Process for the preparation of sodium peroxyborate agglomerates with an active oxygen content of at least 14 % by wt., characterised in that dry amorphous sodium peroxoborate primary particles obtained by spraydrying procedure and having an active oxygen content of at least 14 % by wt., in which the ratio of sodium to boron is a ratio of < 1 deviating from the conventional 1:1-ratio or in which, in the case the active oxygen content is more than 18 % by wt., the ratio of sodium to boron may also be the conventional ratio of about 1:1, are compacted by dry roller pressing-agglomeration into an amorphous sodium peroxoborate agglomerate having the form of pressed strips and these are comminuted into a granular amorphous sodium peroxoborate agglomerate material of small particles having the desired particle size.

2. Process according to claim 1, characterised in that the primary particles are compacted by pressing at a temperature of 20 to 50 °C.

3. Process according to claim 1 or 2, characterised in that the pressed strips are prepared by pressing at a pressure of at least 0.2 tonnes per cm roller length, preferably at a pressure of at least 0.8 tonnes per cm roller length.

4. Process according to one of the preceding claims, characterised in that a dyestuff powder is mixed in homogeneously with the primary particles before pressing.

5. Amorphous sodium peroxoborate agglomerates in the form of granular amorphous sodium peroxoborate agglomerate material obtainable by a process according to the claims 1 to 4 and having an active oxygen content of at least 14 % by wt., wherein the ratio of sodium:boron is a ratio of < 1 deviating from the conventional 1:1-ratio or in which, in the case the active oxygen content is more than 18 % by wt., the ratio of sodium:boron may also be the conventional ratio of about 1:1.

6. Sodium peroxyborate agglomerates according to claim 5, in the form of granular material, with a Na:B molar ratio of from 0.33:1 to 0.67:1 and an active oxygen content of 14 to 25 % by weigth, preferably 16 to 23 % by weight.

7. Sodium peroxyborate agglomerates according to claim 6, in the form of granular material, with a Na:B molar ratio of from 0.45:1 to 0.65:1.

8. Sodium peroxyborate agglomerates according to claim 5, in the form of granular material, with a Na:B molar ratio of from above 0.67:1 to 1:1 and an active oxygen content of 14 to 25 % by wt., wherein in the case of a Na:B molar ratio of 1:1 the active oxygen content is more than 18 % by wt..

9. Coloured peroxyborate agglomerate, preferably in the form of granular material, according to one of claims 5 to 8.

## Revendications

1. Procédé de fabrication des agglomérés de peroxoborate de sodium ayant une teneur en oxygène actif d'au moins 14 % en poids, caractérisé en ce que, par agglomération par compression aux rouleaux à sec, on comprime des particules primaires de peroxoborate de sodium, amorphes et sèches, préparées par un procédé de séchage par atomisation, ayant une teneur en oxygène actif d'au moins 14 %, dans lesquelles le rapport du sodium au bore a une valeur < 1 qui s'écarte du rapport classique de 1:1, ou encore, si la teneur en oxygène actif est supérieure à 18 %, peut être égal au rapport classique d'environ 1:1, pour donner un aggloméré de peroxoborate de sodium amorphe sous la forme de structures gaufrées, ces dernières étant broyées pour donner un granulé d'un aggloméré de peroxoborate de sodium, amorphe et finement divisé, ayant la granulométrie souhaitée.

2. Procédé selon le Revendication 1, caractérisé en ce que les particules primaires sont comprimées par compression à des températures de 20 à 50°C.

3. Procédé selon la Revendication 1 ou 2, caractérisé en ce que les structures gaufrées sont fabriquées par compression sous des pressions d'au moins 0,2 t par cm de longueur de cylindre, de préférence sous des pressions d'au moins 0,8 t par cm de longueur de cylindre.

4. Procédé selon l'une des Revendications précédentes, caractérisé en ce que, avant la compression, on mélange aux particules primaires, jusqu'à homogénéité, une poudre colorante.

5. Agglomérés de peroxoborate de sodium amorphes sous la forme des granulés amorphes de peroxoborate de sodium pouvant être fabriqués par le procédé selon les Revendications 1 à 4, ayant une teneur en oxygéne actif d'au moins 14 %, dans lesquelles le rapport du sodium au bore a une valeur < 1 qui s'écarte du rapport classique de 1:1, ou encore, si la teneur en oxygène actif est supérieure à 18 %, peut être aussi égal au rapport classique d'environ 1:1.

6. Agglomérés de peroxoborate de sodium selon la Revendication 5, sous la forme de granulés ayant un rapport en moles Na:B de 0,33:1 à 0,67:1 et une teneur en oxygène actif de 14 à 25 % en poids, de préférence de 16 à 23 % en poids.

7. Agglomérés de peroxoborate de sodium selon la Revendication 6, sous la forme de granulés ayant un rapport molaire Na:B de 0,45:1 à 0,65:1.

8. Agglomérés de peroxoborate de sodium selon la Revendication 5, sous la forme de granulés ayant un rapport molaire Na:B supérieur à 0,67:1 et pouvant atteindre 1:1, ainsi qu'une teneur en oxygène actif de 14 à 25 % en poids et de préférence de 16 à 23 % en poids, la teneur en oxygène actif étant supérieure à 18 % en poids dans le cas d'un rapport molaire Na:B de 1:1.

9. Aggloméré coloré de peroxoborate, de préférence sous la forme de granulés, selon l'une des Revendications 5 à 8.